Europäisches Patentamt

European Patent Office

Office européen des brevets

(19)

(11) **EP 1 686 030 A1**

(12) **EUROPÄISCHE PATENTANMELDUNG**

(43) Veröffentlichungstag:
**02.08.2006 Patentblatt 2006/31**

(51) Int Cl.:
*B60W 10/02* (2006.01)    *B60W 10/04* (2006.01)
*B60W 10/10* (2006.01)    *F02D 41/02* (2006.01)

(21) Anmeldenummer: **05028692.1**

(22) Anmeldetag: **30.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **28.01.2005 DE 102005004224**

(71) Anmelder: **Voith Turbo GmbH & Co. KG**
**89522 Heidenheim (DE)**

(72) Erfinder: **Hudelmaier, Wolfgang**
**89518 Heidenheim (DE)**

(74) Vertreter: **Koch-Huld, Annegret Christa**
**Dr. Weitzel & Partner**
**Patentanwälte**
**Friedenstrasse 10**
**89522 Heidenheim (DE)**

(54) **Verfahren zur Steuerung des Anfahrvorganges in einem Antriebsstrang eines Fahrzeuges**

(57)  Die Erfindung betrifft ein Verfahren zur Steuerung des Anfahrvorganges in einem Antriebsstrang (1) eines Fahrzeuges, umfassend eine Antriebsmaschine (4) und eine mit dieser koppelbaren und wenigstens eine Gangstufe umfassenden Getriebebaueinheit (2), welche einen hydrodynamischen Getriebeteil umfasst;

-  bei welchem das von der Antriebsmaschine (4) abzugebende Moment $M_{AM}$ unter Berücksichtigung der Übersetzung der aktuellen Gangstufe derart eingestellt wird, dass ein bestimmter vordefinierter Grenzwert $M_{AGrenz}$ für das am Ausgang (A) der Getriebebaueinheit (2) anliegende Ausgangsmoment nicht überschritten wird;

gekennzeichnet durch die folgenden Merkmale:

-  bei welchem bei Vorgabe eines den Fahrerwunsch nach Beschleunigung, Verzögerung oder eines bestimmten Fahrzustandes wenigstens mittelbar charakterisierenden Größe aus diesem ein Sollwert für ein von der Antriebsmaschine (3) abgebbares Moment $M_{AMSoll}$ gebildet wird;
-  bei welchem aus dem zulässigen am Getriebeausgang (8) anliegenden Ausgangsmoment in Abhängigkeit der aktuellen Übersetzung der aktuellen Gangstufe ein zulässiges maximales von der Antriebsmaschine abgebbares Moment unter Berücksichtigung der erforderlichen Eigenbeschleunigung ermittelt wird und als maximal zulässiger Grenzwert für das abzugebende Moment $M_{AMmax-zulässig}$ an der Antriebsmaschine gesetzt wird;
-  bei welchem aus dem aus dem Fahrerwunsch vorgegebenen Sollwert $M_{AMSoll}$ und der erforderlichen Eigenbeschleunigung für die Antriebsmaschine (4) und die hydrodynamische Komponente (9) in der Getriebebaueinheit (2) ein neuer Sollwert $M_{AMSoll-neu}$ gesetzt wird, der mit dem ermittelten theoretisch maximal zulässigen von der Antriebsmaschine abgebbaren Moment $M_{AMmax-zulässig}$ verglichen wird und bei Überschreitung der Sollwert $M_{AMSoll-neu}$ auf den maximal zulässigen Wert $M_{AMmax-zulässig}$ begrenzt wird, während bei Unterschreitung eine Freigabe des neu errechneten Sollwertes $M_{AMSoll-neu}$ erfolgt und die Stelleinrichtung (12) der Antriebsmaschine (4) entsprechend angesteuert wird.

Fig.1a

Fig.1b

**Beschreibung**

Die Erfindung betrifft ein Verfahren zur Steuerung des Anfahrvorganges in einem Antriebsstrang eines Fahrzeuges, im Einzelnen mit den Merkmalen aus dem Oberbegriff von Anspruch 1.

Automatgetriebe, insbesondere Getriebebaueinheiten mit einem hydrodynamischen Getriebeteil und einem mechanischen Getriebeteil, wobei der hydrodynamische Getriebeteil vorzugsweise einen hydrodynamischen Drehzahl-/ Drehmomentwandler umfasst, sind in einer Vielzahl von Ausführungen bekannt. Dabei ergeben sich bei derartigen Getrieben aufgrund der Wandlercharakteristik und der dahinterliegenden mechanischen Übersetzungen in der Regel sehr hohe Übersetzungsverhältnisse. Das Maximum ergibt sich dabei im Stillstand. Mit diesem wird auch das Eingangsdrehmoment auf den Getriebeausgang übertragen, was in der Dimensionierung der einzelnen leistungsübertragenden Elemente der Getriebebaueinheit entsprechend berücksichtigt werden muß. Die Dimensionierung der Getriebebaueinheit erfolgt dabei auf einen in der Regel unbegrenzten Momenten-Spitzenwert. Dies hat zur Folge, daß zur Gewährleistung einer sicheren Betriebsweise mitunter auch Überdimensionierungen erforderlich sind, die sich in einer erheblichen Steigerung der Kosten niederschlagen. Des weiteren sind in den Betriebszuständen, in denen übermäßig hohe Momente übertragen werden, auch die einzelnen an der Leistungsübertragung beteiligten Elemente höheren Beanspruchungen ausgesetzt. Dabei steht der Achsschutz im Vordergrund. Dies wirkt sich über den Gesamtbetriebszyklus betrachtet in einer Verringerung der Lebensdauer und damit Verfügbarkeit der Getriebebaueinheit aus. Zur Vermeidung dieser Nachteile sind Verfahren zur Steuerung des Anfahrvorganges in einem Antriebssystem für Fahrzeuge vorbekannt, mittels welchen das Moment im Antriebsstrang, insbesondere am Getriebeausgang begrenzt wird. Stellvertretend wird dabei auf die nachfolgend genannten Druckschriften verwiesen:

EP-A-0 512 726
DE-A-198 44 618
US-A-5 720 358
FR-A-2 785 961
EP-A-833 042
DE 37 35 246 A1
DE 42 35 881 A1

Aus der Druckschrift EP-A-0 512 726 ist ein Verfahren zur Begrenzung eines Antriebsstrangdrehmomentes unter Verwendung einer Motorsteuerung vorbekannt. Dabei wird das abtriebsseitige Moment durch Erhöhung des Schlupfes eines hydrodynamischen Wandlers im Antriebsstrang aufgrund der Erhöhung oder Verringerung der Motordrehzahl begrenzt, welche als Steuergröße fungiert. Die Steuerungsaufgabe wird dabei von einer elektronischen Steuereinheit übernommen, die beiden Einheiten — Antriebsmaschine und Getriebezugeordnet ist.

Aus der Druckschrift US-A-5 720 358 ist ein Verfahren zur Steuerung des Drehmomentes in einem Antriebsstrang vorbekannt, wobei über die Drehzahl der Antriebsmaschine das Drehmoment im Antriebsstrang auf einen vorbestimmten Wert begrenzt wird. Dabei ist die Antriebsmaschine mit einem hydrodynamischen Wandler gekoppelt. Eine analoge Ausführung ist ferner aus der Druckschrift DE-A-37 35 246 vorbekannt. Auch hier erfolgt die Begrenzung des Drehmoments an der Getriebeabtriebswelle in Abhängigkeit einer vorbestimmten Übersetzung in der Verbindung zwischen der Antriebsmaschine und der Getriebeabtriebswelle durch entsprechende Ansteuerung der Antriebsmaschine.

Bei allen diesen Lösungen werden dabei in Abhängigkeit eines bestimmten gewünschten einzustellenden Ausgangsmomentes an der Getriebeabtriebswelle die von der Antriebsmaschine bereitgestellte Leistung bzw. das abgebbare Moment entsprechend eingesteuert oder eine dieses wenigstens mittelbar charakterisierende Größe. Dabei wird die Übersetzung in der Getriebebaueinheit mit berücksichtigt. Aus der Druckschrift DE 100 45 648 A1 ist ein Verfahren zur Regelung bzw. Begrenzung des Eingangsmomentes eines Getriebes während des Anfahrvorganges vorbekannt, bei welchen das Eingangsmoment derart eingesteuert wird, dass ein bestimmter vordefinierter Grenzwert für das am Ausgang anliegende Ausgangsmoment nicht überschritten wird. Alle Ausführungen haben jedoch den Nachteil, daß entweder im Hinblick auf einen Fahrerwunsch und das maximal zulässige am Ausgang des Getriebes abgebbare Moment die Antriebsmaschine fortlaufend nachgeregelt werden muß und sich ferner ohne Regelung in einigen Betriebsbereichen nur erheblich geringere Momente übertragen werden, als theoretisch zugelassen, was sich in Zugkrafteinbußen äußert. Eine Begrenzung erfolgt dabei nur aufgrund statischer Kennfelder. Nicht berücksichtigt werden können dynamische Vorgänge.

Der Erfindung lag daher die Aufgabe zugrunde, ein Verfahren zur Steuerung des Anfahrvorganges in einem Antriebssystem der eingangs genannten Art derart weiter zu entwickeln, daß die genannten Nachteile vermieden werden. Die vorrichtungsmäßige Umsetzung soll sich dabei durch einen geringen konstruktiven, fertigungstechnischen und steuerungstechnischen Aufwand auszeichnen und insbesondere die theoretische möglich nutzbare Zugkraft ohne Überschreitung des maximal zulässigen Momentes im Antriebsstrang ausgenutzt werden.

Die erfindungsgemäße Lösung ist durch die Merkmale von Anspruch 1 charakterisiert. Vorteilhafte Ausgestaltungen sind in den Unteransprüchen beschrieben.

Bei einem Verfahren zur Steuerung des Anfahrvorganges in einem Antriebsstrang eines Fahrzeuges, umfassend eine Antriebsmaschine und eine mit dieser koppelbaren und wenigstens eine Gangstufe und einen hydrodynamischen Getriebeteil umfassenden Getriebebaueinheit, wird das von der Antriebsmaschine abzugebende Moment $M_{AM}$ unter Berücksichtigung der Übersetzung der aktuellen Gangstufe derart eingestellt, dass ein bestimmter vordefinierter Grenzwert $M_{AGrenz}$ für das am Ausgang der Getriebebaueinheit anliegende Ausgangsmoment nicht überschritten wird. Erfindungsgemäß wird bei Vorgabe eines den Fahrerwunsch nach Beschleunigung, Verzögerung oder eines bestimmten Fahrzustandes wenigstens mittelbar charakterisierenden Größe aus diesem ein Sollwert für ein von der Antriebsmaschine abgebbares Moment $M_{AMSoll}$ gebildet. Bei welchem aus dem zulässigen am Getriebeausgang anliegenden Ausgangsmoment in Abhängigkeit der aktuellen Übersetzung der aktuellen Gangstufe ein zulässiges maximales von der Antriebsmaschine abgebbares Moment unter Berücksichtigung der erforderlichen Eigenbeschleunigung ermittelt wird und als maximal zulässiger Grenzwert für das abzugebende Moment $M_{AMmax-zulässig}$ an der Antriebsmaschine gesetzt wird. Aus der Summe des aus dem Fahrerwunsch gebildeten Sollwertes $M_{AMSoll}$ und der erforderlichen Eigenbeschleunigung für die Antriebsmaschine und die hydrodynamische Komponente wird ein neuer Sollwert $M_{AMSoll-neu}$ gebildet, der mit dem ermittelten theoretisch maximal zulässigen von der Antriebsmaschine abgebbaren Moment $M_{AMmax-zulässig}$ verglichen wird und bei Überschreitung der Sollwert $M_{AMSoll-neu}$ auf den maximal zulässigen Wert $M_{AMmax-zulässig}$ begrenzt wird, während bei Unterschreitung eine Freigabe des neu errechneten Sollwertes $M_{AMSoll-neu}$ erfolgt und die Stelleinrichtung der Antriebsmaschine entsprechend angesteuert wird.

Das erforderliche Beschleunigungsmoment $M_{Beschleunigung4,9}$ bestimmt sich dabei vorzugsweise aus dem primären Trägheitsmoment $J_{primär}$ von Antriebsmaschine und hydrodynamischen Drehzahl-/Drehmomentwandler und der Drehzahländerung an der Antriebsmaschine $\dfrac{\Delta n_{AM}}{\Delta t}$, d. h.

$$M_{Beschleunigung4,9} = \dot{J}_{primär} \times \alpha_{Motor}$$

mit

$$\alpha_{Motor} = \frac{\Delta n_{AM}}{\Delta t} \,.$$

Das theoretisch ermittelte statische erforderliche von der Antriebsmaschine 4 abgebbare Moment $M_{AMstatisch}$ = f ($M_{Ezulässig}$), d. h. dem zulässigen maximalen Eingangsmoment am Getriebe, wenn ein maximal zulässiges Ausgangsmoment nicht überschritten werden darf, wobei

$$M_{Ezulässig} = \frac{M_{AGrenz}}{(\mu \cdot i)}$$

mit

| | |
|---|---|
| μ | - Wandlung |
| l | gangabhängige Übersetzung in der Getriebebaueinheit 2 |
| $M_{AGrenz}$ | - Grenzmoment am Getriebeausgang, d. h. nicht zu überschreitender Vorgabewert für das Ausgangsdrehmoment. |

Gemäß einer besonders vorteilhaften Ausgestaltung wird auch der η (Wirkungsgrad) der Leistungsübertragung mit berücksichtigt.

Die erfindungsgemäße Lösung ermöglicht durch Berücksichtigung der Trägheitsmomente der zu beschleunigenden Massen, die sich insbesondere im Anfahrbereich sehr negativ auf die bei vorgegebenen Motormoment erzielbare Anfahrzugkraft auswirken, da ein nicht unerheblicher Teil des von der Antriebsmaschine bereitgestellten Momentes für diesen Vorgang genutzt werden muß, die tatsächlich einstellbare Zugkraft im Hinblick auf das maximal zulässige am Getriebeausgang abzugebende Moment voll auszunutzen.

Die erfindungsgemäße Lösung wird nachfolgend anhand von Figuren erläutert. Darin ist im Einzelnen folgendes dargestellt:

Figur 1 a      verdeutlicht anhand eines Signalflußbildes für ein schematisch in Figur 1b dargestelltes Antriebssystem das erfindungsgemäße Verfahren;

Figur 2      verdeutlicht in schematisch vereinfachter Darstellung den Momentenverlauf an der Antriebsmaschine während des Anfahrvorganges

Figur 3      verdeutlicht den Zugkraftverlauf während des Anfahrvorganges.

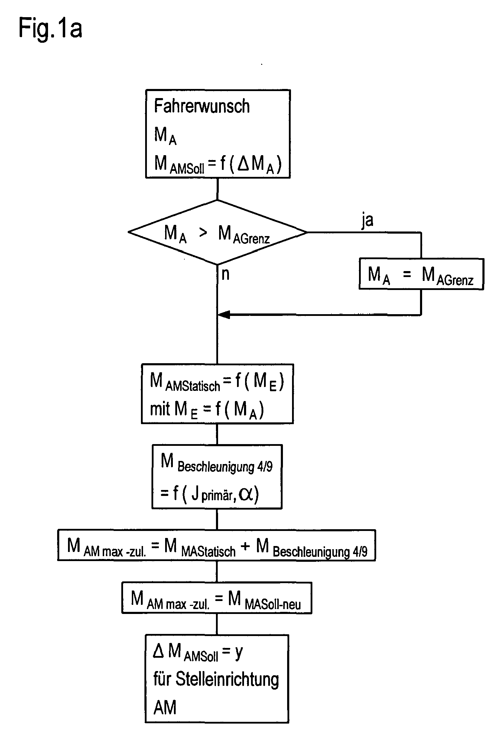

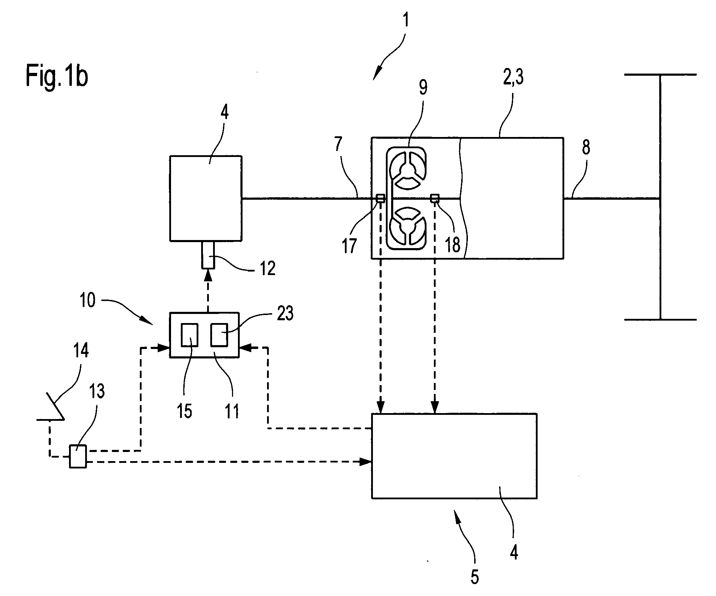

Die Figur 1 a verdeutlicht in schematisch vereinfachter Darstellung anhand eines Signalflußbildes eine mögliche Ausführung eines erfindungsgemäßen Verfahrens zur Steuerung des Anfahrvorganges eines Fahrzeuges mit einem Antriebsstrang 1 gemäß Figur 1 b, umfassend eine Getriebebaueinheit 2, insbesondere in Form eines Wandlerautomatgetriebes 3, und eine Antriebsmaschine 4, welche wenigstens mittelbar mit der Getriebebaueinheit 2, insbesondere dem Wandlerautomatgetriebe 3 gekoppelt ist. Der Getriebebaueinheit 2, insbesondere dem Wandlerautomatgetriebe 3 ist eine Steuervorrichtung 5 zugeordnet, welche wenigstens eine Steuereinrichtung 6, das Getriebesteuergerät, umfasst. Die Getriebebaueinheit 2, insbesondere das Wandlerautomatgetriebe 3 weist wenigstens einen Eingang 7 und einen Ausgang 8 auf. Der Eingang 7 ist dabei wenigstens mittelbar mit der Antriebsmaschine 4 koppelbar. Der Ausgang 8 ist beim Einsatz in Fahrzeugen wenigstens mittelbar mit den anzutreibenden Rädern verbindbar. Die Getriebebaueinheit 2 umfasst mindestens eine hydrodynamische Komponente in Form eines hydrodynamischen Drehzahl-/Drehmomentwandlers 9. Erfindungsgemäß wird zur Optimierung der bereitstellbaren Anfahrzugkraft im Anfahrbereich aus einem nicht zu überschreitenden abgebbaren Ausgangsdrehmoment $M_{AGrenz}$ in der Getriebebaueinheit 2 oder eines dieses wenigstens mittelbar charakterisierenden Wertes ein theoretisch von der Antriebsmaschine $M_{AMstatisch}$ erbringbares Moment ermittelt, wobei zusätzlich die Eigenbeschleunigung der Antriebsmaschine 4 und des hydrodynamischen Drehzahl-/Drehmomentwandlers 9 berücksichtigt wird. Aus dem zur Eigenbeschleunigung der Antriebsmaschine 4 und des hydrodynamischen Drehzahl-/Drehmomentwandlers 9 erforderlichen Moment $M_{Beschleunigung4,9}$ und dem theoretisch statisch ermittelten, von der Antriebsmaschine 4 abzugebenden Moment $M_{AMstatisch}$ wird das theoretisch maximal zulässig abzugebende Moment $M_{AMmax-zulässig}$ ermittelt. Dieses ergibt sich damit nach folgender Beziehung:

$$M_{AMmax\text{-}zulässig} \quad = \quad M_{AMstatisch} + M_{Beschleunigung4,9}$$

mit

$M_{AMmax\text{-}zulässig}$    - theoretisch maximal zulässiges von der Antriebsmaschine 4 abzugebendes Moment

$M_{AMstatisch}$ -    von der Antriebsmaschine 4 unter Berücksichtigung der Getriebeübersetzung und des Zustandes des hydrodynamischen Drehzahl-/Drehmomentwandlers zur Einhaltung eines maximal abgebbaren Moments

$M_{AGrenz}$ -    Grenzmoment am Getriebeausgang

$M_{Beschleunigung4,9}$    Beschleunigungsmoment zur Eigenbeschleunigung der Antriebsmaschine 4 und des hydrodynamischen Drehzahl-/Drehmomentwandlers im Anfahrbereich

Das Beschleunigungsmoment $M_{Beschleunigung4,9}$ bestimmt sich dabei aus dem primären Trägheitsmoment $J_{primär}$ von Antriebsmaschine und hydrodynamischem Drehzahl-/Drehmomentwandler 9 und der Drehzahländerung an

der Antriebsmaschine $\dfrac{\Delta n_{AM}}{\Delta t}$

mit

$$M_{Beschleunigung4,9} = = \dot{J}_{primär} \times \alpha_{Motor}$$

mit

$$\alpha_{Motor} = \frac{\Delta n_{AM}}{\Delta t} \,.$$

Das theoretisch ermittelte statische erforderliche von der Antriebsmaschine 4 abgebbare Moment $M_{AMstatisch}$ = f ($M_{Ezulässig}$)

mit

$M_{Ezulässig}$ = zulässiges Eingangsmoment einer Getriebeeingangswelle

und

$$M_{Ezulässig} = \frac{M_{AGrenz}}{(\mu \cdot i)}$$

mit

$\mu$ -      Wandlung

I -      gangabhängige Übersetzung in der Getriebebaueinheit

$M_{AGrenz}$      Grenzmoment am Getriebeausgang, d. h. nicht zu überschreitender Vorgabewert für das Ausgangsdrehmoment.

Den $\mu$-Werten können dabei v-Werte zugeordnet werden, welche in der Steuereinrichtung 6 als $\mu$ = f($\upsilon$) Kennlinien hinterlegt sein können oder aber beispielsweise auch berechnet werden können. Dabei ergibt sich $\upsilon$ aus der Beziehung:

$$\upsilon = \frac{n_T}{n_P}$$

mit

$\upsilon$      - Drehzahlverhältnis

$n_T$      - Turbinendrehzahl

$n_P$      - Pumpendrehzahl des hydrodynamischen Drehzahl-/ Drehmomentwandlers.

Die Drehzahlen von Primär-bzw. Pumpenrad und Sekundär- bzw. Turbinenrad werden beispielsweise über Erfassungseinrichtungen 17 und 18, die diesen zugeordnet sind, direkt erfaßt oder aber über die diese Größen wenigstens mittelbar bestimmende Größen erfassende Einrichtungen.

Die Berechnung des zulässigen Eingangsmomentes an der Getriebebaueinheit 2, des zu diesem in funktionalem Zusammenhang stehenden von der Antriebsmaschine 4 zur Erzielung diesen abzugebende Moment sowie des sich aus dem Fahrerwunsch ergebenden an der Getriebeausgangswelle abzugebenden Momentes erfolgt dabei in entsprechenden Steuereinrichtungen, wobei je nach Bereitstellung dieser Daten die Auswertung und Verarbeitung entweder in einer einzigen Steuereinrichtung erfolgt oder einer Mehrzahl, den einzelnen Komponenten zugeordneten Steuereinrichtungen oder einer diesen übergeordneten Steuereinrichtung. Die Ausführung gemäß Figur 1b ist diesbezüglich nur beispielhaft. Der Antriebsmaschine 4 ist dabei im einfachsten Fall ebenfalls eine Steuervorrichtung 10 zugeordnet, welche eine Steuereinrichtung 11 umfasst. Die Steuereinrichtung 10 kann dabei beispielsweise von einer am Fahrzeug ohnehin vorhandenen Fahrsteuerung gebildet werden, denkbar ist jedoch auch die separate Zuordnung der Steuereinrichtung zur Antriebsmaschine 4. Die Steuereinrichtung 11 der Antriebsmaschine 4 ist dabei mit einem Leistungsstellglied 12 der Antriebsmaschine 4 gekoppelt. Über das Leistungsstellglied 12 kann das von der Antriebsmaschine 4 abgebbare Moment wenigstens mittelbar beeinflusst werden. Die Ansteuerung erfolgt bei Vorgabe eines, den Fahrerwunsch nach erhöhter Geschwindigkeit oder Beschleunigung wenigstens mittelbar charakterisierenden Größe beschreibenden Signals. Dazu ist die Steuereinrichtung 11 zur Aufnahme einer den Fahrerwunsch wenigstens mittelbar charakterisierenden Größe mit einer Einrichtung 13 zur Erfassung bzw. Generierung eines Signals aus einer, den Fahrerwunsch wenigstens mittelbar beschreibenden Größe gekoppelt. Vorzugsweise erfolgt die Kopplung direkt mit einem Betätigungselement 14, welches als Fahrpedal ausgebildet ist und über welches der Fahrerwunsch nach erhöhter Geschwindigkeit oder Beschleunigung vorgebbar ist. Von der Steuereinrichtung 11 der Antriebsmaschine 4, in der Regel dem Motorregler, wird dabei diese Eingangsgröße, welche den Sollwert für eine vom Fahrer gewünschte Beschleunigung und/oder Erhöhung der Geschwindigkeit bildet, verarbeitet, wozu die Steuereinrichtung 11 eine Auswerteinrichtung 15 aufweist. Diese bildet den Sollwert für die Einsteuerung des Leistungsstellgliedes bzw. der Stelleinrichtung 12 der Antriebsmaschine 4 zur Änderung des abgebbaren Momentes $M_{MA}$ und/oder der Leistung. In Abhängigkeit dieses Momentes $M_{MA}$, welches dem abgebbaren Moment an der Antriebsmaschine 4 entspricht, weist das an der Getriebebaueinheit 2, insbesondere dem Wandlerautomatgetriebe 3 am Eingang 7 anliegende Eingangsmoment $M_E$ eine bestimmte Größe auf. Dieses wird in Abhängigkeit der angelegten Gangübersetzung während des Anfahrvorgangs in der Regel dem ersten Gang, aufgrund der Drehzahl-/Drehmomentwandler ein bestimmtes Ausgangsdrehmoment $M_A$ am Ausgang der Getriebebaueinheit 2 bewirken. Wird die Größe des abgebbaren Drehmomentes $M_A$ am Ausgang 8 begrenzt, d. h., dass diese einen zulässigen Wert $M_{AGrenz}$ nicht übersteigen, berechnet sich dabei das sich daraus ergebende Eingangsdrehmoment $M_E$ an der Getriebebaueinheit 2 aus der Beziehung $M_E = M_{AGrenz}/(\mu \cdot i)$. Die sich während des Anfahrvorganges zwischen dem Pumpenrad und dem Turbinenrad des hydrodynamischen Wandlers 9 ergebenden Drehzahlverhältnisse werden dabei beispielsweise fortlaufend berechnet. Das Eingangsmoment $M_E$ an der Getriebebaueinheit 2 steht dabei im direkten funktionalen Zusammenhang zum abgebbaren Moment an der Antriebsmaschine $M_{AMstatisch}$. Sind keine Nebenverbraucher in der Verbindung zwischen der Antriebsmaschine 4 und der Getriebebaueinheit 2 vorgesehen, entspricht das aus dem maximal in der Getriebebaueinheit abgebbaren Moment $M_{AGrenz}$ bestimmten Eingangsmoment $M_E$ am Eingang der Getriebebaueinheit 2 dem statischen Motormoment $M_{AMstatisch}$, welches theoretisch einzustellen wäre. Erfindungsgemäß wird jedoch das erforderliche Beschleunigungsmoment $M_{Beschleunigung4,9}$ mitberücksichtigt, indem dieses dem theoretisch ermittelten statischen Momentes $M_{AMstatisch}$ von der Antriebsmaschine 4 zugeschlagen wird. Damit ergibt sich ein theoretisch um das Beschleunigungsmoment $M_{Beschleunigung4,9}$ erhöhtes zulässiges von der Antriebsmaschine 4 bereitstellbares Moment, wobei jedoch immer noch gewährleistet ist, dass $M_{AGrenz}$ am Ausgang der Getriebebaueinheit nicht überschritten wird. Die Ansteuerung der Antriebsmaschine 4 erfolgt nunmehr derart, dass sich das auf den Fahrerwunsch ergebende einzustellende Sollmoment $M_{AMSoll}$ mit dem erforderlichen Beschleunigungsmoment $M_{Beschleunigung4,9}$ zu einem neuen Sollwert addiert wird, der mit $M_{AMSoll}$ bezeichnet ist und welcher mit dem berechneten maximalen Moment $M_{AGrenz}$ verglichen wird, wobei bei Unterschreitung der neue Sollwert $M_{AMSoll-neu}$ eingesteuert wird, während bei Überschreitung der neue Sollwert $M_{AMSoll-neu}$ gleich dem Grenzwert gesetzt wird. Zu diesem Zweck weist die Steuereinrichtung 11 eine Vergleichseinrichtung 23 auf, welche einen Vergleich des theoretisch berechneten maximal von der Antriebsmaschine zulässigen abgebbaren Momentes, welches der Summe aus $M_{AMstatisch}$ und der erforderlichen Eigenbeschleunigung $M_{Beschleunigung4,9}$ entspricht mit dem sich in Abhängigkeit vom Fahrerwunsch unter Berücksichtigung der Eigenbeschleunigung ergebenden Moment verglichen wird. Dabei ist zu berücksichtigen, dass diese Beziehung nur für die direkte Kopplung zwischen dem Ausgang der Antriebsmaschine 4 und dem Eingang 7 der Getriebeeingangswelle gilt, d. h. wenn keine zwischengeschaltete Drehzahl-/Drehmomentenwandlung erfolgt. Ansonsten ist eine zwischengeschaltete Komponente hinsichtlich der Kraftübertragung mit zu berücksichtigen. Gleiches gilt für eventuell an diese Verbindung angekoppelte Nebenverbraucher.

In Abhängigkeit des Ergebnisses der Vergleichseinrichtung 23 wird somit eine Stellgröße zur Änderung der Ansteuerung der Stelleinrichtung 12 der Antriebsmaschine 4 gebildet.

Die für die Steuerung erforderlichen Drehzahlen $n_T$ und $n_P$ können entweder unmittelbar oder mittelbar erfasst werden. Dabei kann die Erfassung entweder durch die entsprechende Einrichtung 17, 18, beispielsweise in Form von Sensoren, direkt an den entsprechenden Messstellen oder durch Erfassung der Drehzahlen an anderen, in einem bekannten Übersetzungsverhältnis stehenden Messstellen oder durch die Auswertung der über eine Schnittstelle, zum Beispiel CAN-Bus übertragenden Drehzahl, erfolgen.

Bei Vorhandensein von Nebenaggregaten bestimmt sich die von der Antriebsmaschine bereitzustellende Leistung und damit auch das bereitstellende Moment aus der Summe von Antriebsleistung zum Bewegen des Fahrzeuges und der Antriebsleistung für die Nebenaggregate. In diesem Fall kann das zulässige von der Antriebsmaschine abgebbare Moment $M_{AM}$ um diesen Betrag erhöht werden.

Bei der in Figur 1 b dargestellten Ausführung erfolgt die Berechnung der mit der Getriebebaueinheit zusammenhängenden Größen in der dieser zugeordneten Steuereintichtung. Denkba ist auch, diese Berechungen in einer zentralen, beispielsweise übergeordneten Fahrsteuerung vorzunehmen.

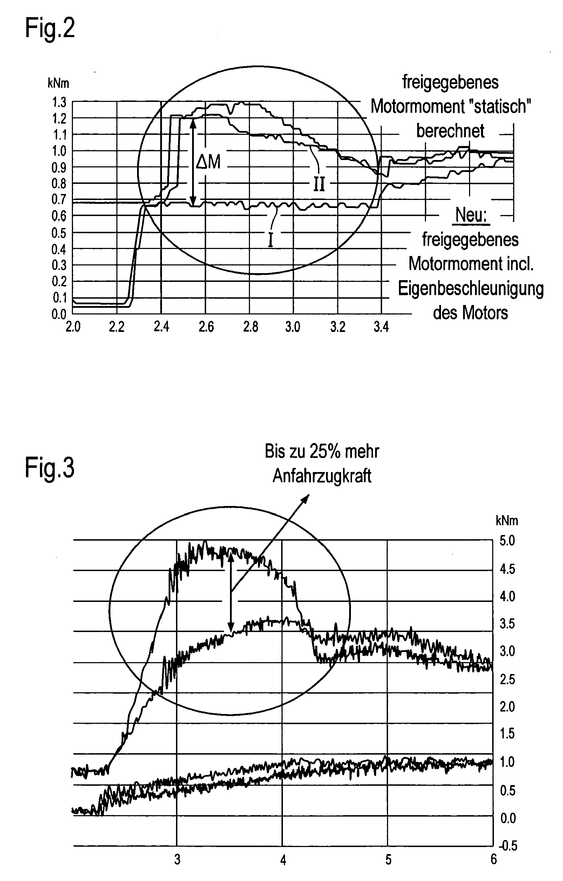

Die Figur 2 verdeutlicht in schematisch vereinfachter Darstellung den Momentenverlauf an der Antriebsmaschine 4 während des Anfahrvorganges in einem Fahrzeug mit einem Wandlerautomatgetriebe wie in Figur 1 beschrieben, bei welchem das Motormoment aufgrund der Wandlerkennlinie und der Getriebeübersetzung statisch berechnet wurde und in Abhängigkeit eines nicht zu überschreitenden Momentes am Getriebeausgang bestimmt wurde. Daraus ergibt sich, dass das statische Moment über einen erheblichen Teil des Anfahrbereiches im Wesentlichen konstant gehalten wird. Berücksichtigt man die erforderliche Eigenbeschleunigung, welche durch ΔM über den Anfahrvorgang erforderlich ist, ergibt sich ein theoretisch mögliches höheres von der Antriebsmaschine bereit stellbares Moment, welches trotzdem einen zulässigen Ausgangsmomentwertes am Getriebeausgang nicht überschreitet. Die Differenz ΔM zwischen statisch berechneter und dynamischer Momentenfreigabe wird zur Massenbeschleunigung verwendet. Damit ergibt sich gemäß Figur 3 eine wesentliche erhöhte Anfahrtszugkraft gegenüber der bisherigen Lösung, die ohne Berücksichtigung der Eigenbeschleunigung der Komponenten ausgeht.

Figur 3 verdeutlicht dabei das Abtriebsmoment im Fahrzeug, d. h. welches an den Rädern wirksam wird, und proportional zu dem an der Getriebeausgangswelle anliegenden Moment ist. Daraus wird ersichtlich, dass sich über die Dauer des Anfahrvorganges ein gegenüber der bisherigen aus dem Stand der Technik bekannten Lösung, die mit I bezeichnet ist in der mit II bezeichneten Kennlinie ein wesentlich höheres Abtriebsmoment ergibt, das sich zeitlich über den Anfahrvorgang ändert. Dabei können zum Teil Anfahrzugkraftzuwächse in Höhe von 25 % erzielt werden.

Bezugszeichenliste

| 1 | Antriebsstrang |
| 2 | Getriebebaueinheit |
| 3 | Wandlerautomatgetriebe |
| 4 | Antriebsmaschine |
| 5 | Steuervorrichtung |
| 6 | Steuereinrichtung |
| 7 | Eingang |
| 8 | Ausgang |
| 9 | Wandler |
| 10 | Steuervorrichtung der Antriebsmaschine |
| 11 | Steuereinrichtung der Antriebsmaschine |
| 12 | Leistungsstellglied |
| 13 | Einrichtung zur Erfassung einer den Fahrerwunsch wenigstens mittelbar charakterisierenden Größe |
| 14 | Betätigungseinrichtung |
| 15 | Auswerteinrichtung der Steuereinrichtung der Antriebsmaschine |
| 16 | Eingang der Steuereinrichtung der Getriebebaueinheit |
| 17 | Einrichtung zur Erfassung der Drehzahl des Pumpenrades |
| 18 | Einrichtung zur Erfassung der Drehzahl des Turbinenrades |

| $M_A$ | Ausgangsdrehmoment am Getriebeausgang |
| $M_E$ | Eingangsdrehmoment am Getriebeeingang |
| $M_{AMSoll}$ | abgebbares Drehmoment der Antriebsmaschine |
| $M_{AMSoll-neu}$ | neu gesetztes abgebbares Drehmoment der Antriebsmaschine |
| $M_{AMmax-zulässig}$ | maximal von der Antriebsmaschine zulässiges abgebbares Moment |
| $M_{AGrenz}$ | Grenzwert des Ausgangsdrehmomentes am Getriebeausgang |

**Patentansprüche**

1.  Verfahren zur Steuerung des Anfahrvorganges in einem Antriebsstrang (1) eines Fahrzeuges, umfassend eine Antriebsmaschine (4) und eine mit dieser koppelbaren und wenigstens eine Gangstufe umfassenden Getriebebaueinheit (2), welche einen hydrodynamischen Getriebeteil umfasst;

    1.1 bei welchem das von der Antriebsmaschine (4) abzugebende Moment $M_{AM}$ unter Berücksichtigung der Übersetzung der aktuellen Gangstufe derart eingestellt wird, dass ein bestimmter vordefinierter Grenzwert $M_{AGrenz}$ für das am Ausgang (A) der Getriebebaueinheit (2) anliegende Ausgangsmoment nicht überschritten wird;

    **gekennzeichnet durch** die folgende Merkmale:
    1.2 bei welchem bei Vorgabe eines den Fahrerwunsch nach Beschleunigung, Verzögerung oder eines bestimmten Fahrzustandes wenigstens mittelbar charakterisierenden Größe aus diesem ein Sollwert für ein von der Antriebsmaschine (3) abgebbares Moment $M_{AMSoll}$ gebildet wird;

1.3 bei welchem aus dem zulässigen am Getriebeausgang (8) anliegenden Ausgangsmoment in Abhängigkeit der aktuellen Übersetzung der aktuellen Gangstufe ein zulässiges maximales von der Antriebsmaschine abgebbares Moment unter Berücksichtigung der erforderlichen Eigenbeschleunigung ermittelt wird und als maximal zulässiger Grenzwert für das abzugebende Moment $M_{AMmax-zulässig}$ an der Antriebsmaschine gesetzt wird;

1.4 bei welchem aus dem aus dem Fahrerwunsch vorgegebenen Sollwert $M_{AMSoll}$ und der erforderlichen Eigenbeschleunigung für die Antriebsmaschine (4) und die hydrodynamische Komponente (9) in der Getriebebaueinheit (2) ein neuer Sollwert $M_{AMSoll-neu}$ gesetzt wird, der mit dem ermittelten theoretisch maximal zulässigen von der Antriebsmaschine abgebbaren Moment $M_{AMmax-zulässig}$ verglichen wird und bei Überschreitung der Sollwert $M_{AMSoll-neu}$ auf den maximal zulässigen Wert $M_{AMmax-zulässig}$ begrenzt wird, während bei Unterschreitung eine Freigabe des neu errechneten Sollwertes $M_{AMSoll-neu}$ erfolgt und die Stelleinrichtung (12) der Antriebsmaschine (4) entsprechend angesteuert wird.

2. Verfahren nach Anspruch 1, bei welchem sich das Beschleunigungsmoment ($M_{Beschleunigung\ 4,9}$) als Funktion des primären Trägheitsmomentes bestimmt.

3. Verfahren nach Anspruch 2, **dadurch gekennzeichnet, dass** das Beschleunigungsmoment ($M_{Beschleunigung\ 4,9}$) sich nach folgender Gleichung ermittelt:

$$M_{Beschleunigung\ 4,9} = J_{primär} \bullet \alpha_{Motor}$$

mit

$$\alpha_{Motor} = \frac{\Delta_{nAM}}{\Delta_t} \quad .$$

# Fig.1a

$$\boxed{\begin{array}{l} \text{Fahrerwunsch} \\ M_A \\ M_{AMSoll} = f(\Delta M_A) \end{array}}$$

$$M_A > M_{AGrenz} \quad \text{ja} \longrightarrow \boxed{M_A = M_{AGrenz}}$$

n

$$\boxed{\begin{array}{l} M_{AMStatisch} = f(M_E) \\ \text{mit } M_E = f(M_A) \end{array}}$$

$$\boxed{\begin{array}{l} M_{Beschleunigung\ 4/9} \\ = f(J_{prim\ddot{a}r}, \alpha) \end{array}}$$

$$\boxed{M_{AM\ max\text{-}zul.} = M_{MAStatisch} + M_{Beschleunigung\ 4/9}}$$

$$\boxed{M_{AM\ max\text{-}zul.} = M_{MASoll\text{-}neu}}$$

$$\boxed{\begin{array}{l} \Delta M_{AMSoll} = y \\ \text{für Stelleinrichtung} \\ \text{AM} \end{array}}$$

Fig.1b

## Fig.2

freigegebenes
Motormoment "statisch"
berechnet

ΔM

II

I

Neu:
freigegebenes
Motormoment incl.
Eigenbeschleunigung
des Motors

kNm

1.3
1.2
1.1
1.0
0.9
0.8
0.7
0.6
0.5
0.4
0.3
0.2
0.1
0.0

2.0   2.2   2.4   2.6   2.8   3.0   3.2   3.4

## Fig.3

Bis zu 25% mehr
Anfahrzugkraft

kNm

5.0
4.5
4.0
3.5
3.0
2.5
2.0
1.5
1.0
0.5
0.0
-0.5

3          4          5          6

**Europäisches Patentamt**

## EUROPÄISCHER RECHERCHENBERICHT

Nummer der Anmeldung

EP 05 02 8692

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | DE 100 45 648 A1 (VOITH TURBO GMBH & CO. KG) 4. April 2002 (2002-04-04) * das ganze Dokument * ----- | 1-3 | INV. B60W10/02 B60W10/04 B60W10/10 |
| Y | EP 1 391 341 A (JATCO LTD) 25. Februar 2004 (2004-02-25) * Absätze [0008], [0009], [0031] - [0034], [0043], [0047]; Ansprüche 1,2,4; Abbildungen 1,3,4 * ----- | 1-3 | F02D41/02 |
| Y | EP 1 074 424 A (TOYOTA JIDOSHA KABUSHIKI KAISHA) 7. Februar 2001 (2001-02-07) * Absätze [0019], [0075] - [0090] * ----- | 1-3 | |
| Y | PATENT ABSTRACTS OF JAPAN Bd. 2000, Nr. 12, 3. Januar 2001 (2001-01-03) & JP 2000 248972 A (MITSUBISHI MOTORS CORP), 12. September 2000 (2000-09-12) * Zusammenfassung * ----- | 1-3 | |
| Y | US 2003/017911 A1 (LACK ADAM C) 23. Januar 2003 (2003-01-23) * Absatz [0036]; Ansprüche 1,7,12 * ----- | 1-3 | RECHERCHIERTE SACHGEBIETE (IPC) B60K F02D |
| Y | EP 1 186 462 A (VISTEON GLOBAL TECHNOLOGIES, INC) 13. März 2002 (2002-03-13) * Absätze [0013], [0017], [0018]; Anspruch 1; Abbildungen 1,2 * ----- | 1-3 | |
| A | DE 199 50 664 A1 (ZF FRIEDRICHSHAFEN AG) 26. April 2001 (2001-04-26) * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| Berlin | 11. Mai 2006 | Matos Gonçalves, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 02 8692

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2006

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 10045648 | A1 | | 04-04-2002 | AT | 307039 | T | 15-11-2005 |
| | | | | DE | 50107740 | D1 | 24-11-2005 |
| | | | | EP | 1188601 | A1 | 20-03-2002 |
| EP 1391341 | A | | 25-02-2004 | JP | 2004068686 | A | 04-03-2004 |
| | | | | US | 2004117096 | A1 | 17-06-2004 |
| EP 1074424 | A | | 07-02-2001 | DE | 60014800 | D1 | 18-11-2004 |
| | | | | DE | 60014800 | T2 | 20-10-2005 |
| | | | | DE | 60016290 | D1 | 30-12-2004 |
| | | | | DE | 60016290 | T2 | 24-11-2005 |
| | | | | JP | 3546302 | B2 | 28-07-2004 |
| | | | | JP | 2001225672 | A | 21-08-2001 |
| | | | | US | 6389348 | B1 | 14-05-2002 |
| JP 2000248972 | A | | 12-09-2000 | KEINE | | | |
| US 2003017911 | A1 | | 23-01-2003 | BR | 0211355 | A | 16-11-2004 |
| | | | | CA | 2452070 | A1 | 06-02-2003 |
| | | | | CN | 1537221 | A | 13-10-2004 |
| | | | | EP | 1419313 | A2 | 19-05-2004 |
| | | | | JP | 2004536993 | T | 09-12-2004 |
| | | | | MX | PA04000098 | A | 21-05-2004 |
| | | | | WO | 03010427 | A2 | 06-02-2003 |
| EP 1186462 | A | | 13-03-2002 | US | 6379281 | B1 | 30-04-2002 |
| DE 19950664 | A1 | | 26-04-2001 | KEINE | | | |

Für nähere Einzelheiten zu diesem Anhang : siehe Amtsblatt des Europäischen Patentamts, Nr.12/82

EPO FORM P0461